(19) Europäisches Patentamt / European Patent Office / Office européen des brevets

(11) **EP 1 870 743 A1**

(12) **EUROPEAN PATENT APPLICATION**
published in accordance with Art. 153(4) EPC

(43) Date of publication:
**26.12.2007 Bulletin 2007/52**

(51) Int Cl.:
*G02B 5/02* (2006.01)　　　*F21S 2/00* (2006.01)
*F21V 3/02* (2006.01)　　　*G02F 1/13357* (2006.01)
*F21Y 103/00* (2006.01)

(21) Application number: **06731639.8**

(22) Date of filing: **05.04.2006**

(86) International application number:
**PCT/JP2006/307692**

(87) International publication number:
**WO 2006/109818 (19.10.2006 Gazette 2006/42)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.04.2005 JP 2005114475**
**12.04.2005 JP 2005114476**

(71) Applicant: **Teijin Chemicals, Ltd.**
**Tokyo 100-0011 (JP)**

(72) Inventors:
• **HORIGUCHI, Toru,**
  **c/o Teijin Chemicals Ltd.**
  **Tokyo 1000011 (JP)**
• **KOMATSUBARA, Shigemaru,**
  **c/o Teijin Chemicals Ltd.**
  **Tokyo 1000011 (JP)**

(74) Representative: **Albrecht, Thomas**
**Kraus & Weisert**
**Thomas-Wimmer-Ring 15**
**80539 München (DE)**

(54) **RESIN SHEET, DIRECT BACKLIGHT UNIT, AND DIRECT BACKLIGHT TYPE LIQUID CRYSTAL DISPLAY**

(57)　There is provided a resin sheet having a thickness of 1 to 5 mm,
having recesses formed on one surface thereof, the recess having a multi-sided pyramid shape, a truncated multi-sided pyramid shape, a conical shape, a truncated conical shape or a severed sphere shape,
having an angle $\alpha$ which satisfies $10° \leq \alpha \leq 40°$ or $50° \leq \alpha \leq 80°$ or $40° < \alpha \leq 43°$ or $47° \leq \alpha < 50°$ when the angle $\alpha$ is formed by a side face or the generatrix of the recess and a plane having the opening of the recess thereon, and

satisfying at least one of the following conditions (1) and (2).
(1) The above recesses form a number of row groups, wherein each row group which constitute the number of row groups comprises a number of rows adjacent to each other, each row comprises the recesses arranged in a line, and each row group is adjacent to other row groups via areas free of the recesses.
(2) Severed-sphere- shaped projections are formed on the surface opposite to the surface having the above recesses formed thereon.

Fig. 8

EP 1 870 743 A1

**Description**

Field of the Invention

The present invention relates to a resin sheet which controls periodic brightness nonuniformity caused by direct backlight, achieves high brightness uniformity and can be suitably used as a light diffusion plate for direct backlight which has high front brightness, and a direct backlight unit and direct backlight type liquid crystal display using the resin sheet.

Background Art

As a light diffusion plate which is a constituent of a backlight unit used as a light source in various liquid crystal displays including a liquid crystal television, a light diffusion plate formed from a resin composition prepared by adding various light diffusing agents to a matrix resin which is an acrylic resin or a polycarbonate resin is used.

A light diffusion plate made of an acrylic resin is susceptible to the influence of moisture absorption such as warpage in liquid crystal displays such as liquid crystal televisions which have been increasing in size to 15 to 39 inches, and use of a light diffusion plate made of a polycarbonate which is less moisture absorbable has been gradually increasing.

As known examples of a polycarbonate resin composition as a light diffusion plate for liquid crystal displays, for example, a resin composition prepared by adding calcium carbonate and titanium oxide to a polycarbonate resin is disclosed in JP-A 3-078701, a resin composition prepared by adding calcium carbonate and a cross-linked polyarylate resin to a polycarbonate resin is disclosed in JP-A 5-257002, a resin composition prepared by adding a bead-shaped cross-linked acrylic resin to a polycarbonate resin is disclosed in JP-A 8-188709, and a resin composition prepared by adding a bead-shaped cross-linked acrylic resin and a fluorescent brightening agent to a polycarbonate resin is disclosed in JP-A 9-20860.

Further, in liquid crystal displays which have been increasing in size, an improvement in brightness has been requested along with an increase in luminescent area, and a direct backlight system has been becoming mainstream accordingly. The direct backlight is intended to improve brightness by arranging a number of linear light sources in parallel and has a problem of so-called periodic brightness nonuniformity that brightness is high in areas of the luminescent surface which are directly above the light sources and brightness is low in areas of the luminescent surface which have no light sources directly thereunder.

Several attempts have so far been made to reduce such periodic brightness nonuniformity. For example, JP-A 2004-163575 discloses a light diffusion laminate made of a polycarbonate resin for direct backlight, the laminate comprising a polycarbonate resin film having a three-dimensional pattern on the surface and having a thickness of 0.05 to 0.3 mm and a polycarbonate resin sheet containing a light diffusing agent and having a thickness of 0.5 to 3 mm. Further, JP-A 6-308304 describes a light collecting sheet comprising a substrate sheet having an embossed surface. However, even these techniques are not satisfactory in reduction of brightness nonuniformity.

Further, JP-A 2004-127680 describes a direct backlight unit using a light diffusion plate having rows of prisms each having a sawtooth cross-section on the light source side. However, even the light diffusion plate is not satisfactory in reduction of brightness nonuniformity and is low in productivity.

Recently, in liquid crystal televisions which often use direct backlight, requests for the above improvement in front brightness and reduction in periodic brightness nonuniformity have been becoming stronger, and a request for a reduction in costs has also been becoming stronger.

Disclosure of the Invention

The present invention has been conceived based on an object of providing a resin sheet which can be produced at low cost, achieves high brightness uniformity by reducing periodic brightness nonuniformity ascribable to a number of linear light sources in direct backlight and can be used as a light diffusion plate for direct backlight which has high front brightness, and a direct backlight unit and direct backlight type liquid crystal display using the resin sheet.

The present inventors have made intensive studies to achieve the above object. As a result, they have found that formation of specific fine shapes on one or both surfaces of a resin sheet which is transparent or contains a small amount of a diffusing agent to collect or scatter light enables the resin sheet to be used as a light diffusion plate capable of achieving high brightness uniformity without attenuating light emitted from a light source and that surprisingly, since use of such a resin sheet as the light diffusion plate can achieve an improvement in front brightness, some or all of light adjusting films which have so far been used to improve brightness such as a diffusion film and a prism sheet can be omitted and costs of liquid crystal displays can also be reduced. The present invention has been completed based on these findings.

That is, firstly, the above object of the present invention is achieved by a resin sheet:

having a thickness of 1 to 5 mm,
having recesses formed on one surface thereof, the recess being selected from the group consisting of a multi-sided pyramid shape, a truncated multi-sided pyramid shape, a conical shape, a truncated conical shape and a severed sphere shape,
having an angle $\alpha$ which satisfies $10° \leq \alpha \leq 40°$ or $50° \leq \alpha \leq 80°$ or $40° < \alpha \leq 43°$ or $47° \leq \alpha < 50°$ when the angle $\alpha$ is formed by a side face of the recess having a multi-sided pyramid shape or a truncated multi-sided pyramid shape and a plane having the opening of the recess thereon or when the angle $\alpha$ is formed by the generatrix of the recess having a conical shape or a truncated conical shape and a plane having the opening of the recess thereon, and satisfying at least one of the following conditions (1) and (2).

(1) The above recesses form a number of row groups, wherein each row group which constitute the number of row groups comprises a number of rows adjacent to each other, each row comprises the recesses arranged in a line, and each row group is adjacent to other row groups via areas free of the recesses.
(2) Severed-sphere-shaped projections are formed on the surface opposite to the surface having the above recesses formed thereon.

Secondly, the above object of the present invention is achieved by use of the above resin sheet as a light diffusion plate for direct backlight.

Thirdly, the above object of the present invention is achieved by a light diffusion plate for direct backlight which comprises the above resin sheet.

Fourthly, the above object of the present invention is achieved by a direct backlight unit having at least a number of linear light sources and a light diffusion plate comprising the above resin sheet.

Finally, the above object of the present invention is achieved by a direct backlight type liquid crystal display comprising at least the above direct backlight unit, light adjusting films and a liquid crystal panel.

Brief Description of the Drawings

Fig. 1 is a diagram illustrating the definition of an angle $\alpha$.
Fig. 2 is a schematic plan view of one example of a plurality of row groups constituted by recesses formed on one surface of a light diffusion pate.
Fig. 3 is a schematic plan view of one example of the aligned state of recesses formed on one surface of a light diffusion pate.
Fig. 4 is a schematic plan view of one example of the aligned state of recesses formed on one surface of a light diffusion pate.
Fig. 5 is a schematic plan view of one example of the aligned state of recesses formed on one surface of a light diffusion pate.
Fig. 6 is a schematic sectional view of a brightness evaluation apparatus.
Fig. 7 is a diagram illustrating a method for evaluating average brightness and brightness nonuniformity.
Fig. 8 is a schematic sectional view of one example of a backlight unit according to the present invention.
Fig. 9 is a graph illustrating brightness angular distributions in Example 2 and Comparative Example 1.
Fig. 10 is a schematic sectional view of one example of the backlight unit according to the present invention.
Fig. 11 is a graph illustrating brightness angular distributions in Example 15 and Comparative Example 1.

Best Mode for Carrying out the Invention

Resin Sheet

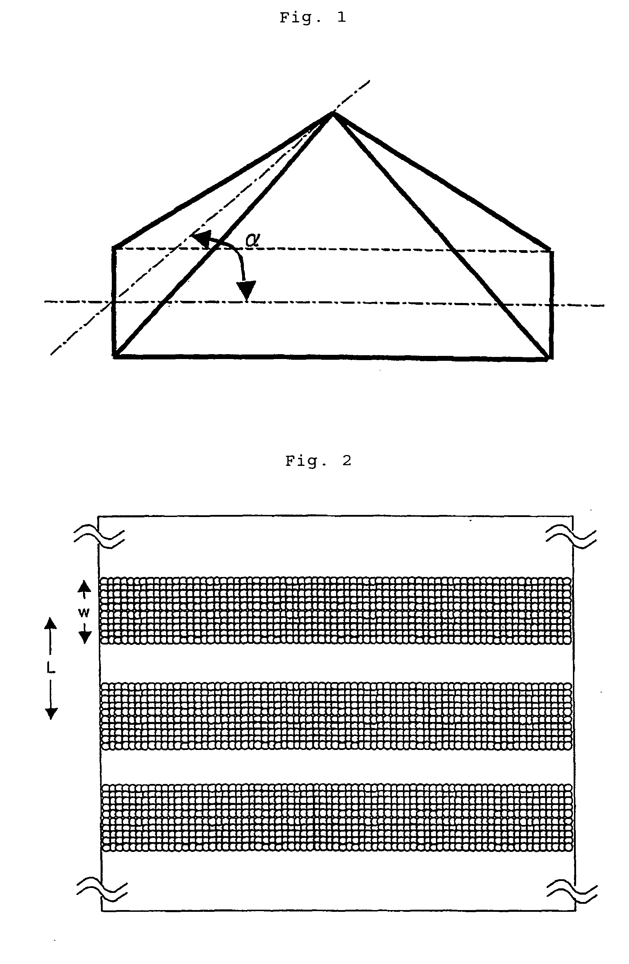

The shape of recesses formed on one surface of a resin sheet of the present invention is selected from the group consisting of a multi-sided pyramid shape, a truncated multi-sided pyramid shape, a conical shape, a truncated conical shape and a severed sphere shape. When the recess has a multi-sided pyramid shape or a truncated multi-sided pyramid shape, an angle $\alpha$ which is formed by a side face of the recess and a plane having the opening of the recess thereon, and when the recess has a conical shape or a truncated conical shape, an angle $\alpha$ which is formed by the generatrix of the recess and a plane having the opening of the recess thereon satisfies $10° \leq \alpha \leq 40°$ or $50° \leq \alpha \leq 80°$ or $40° < \alpha \leq 43°$ or $47° \leq \alpha < 50°$. When the angle $\alpha$ is out of the above ranges, a reduction in periodic brightness nonuniformity becomes unsatisfactory. The angle $\alpha$ preferably satisfies $10° \leq \alpha \leq 30°$ or $60° \leq \alpha \leq 80°$. The definition of the angle $\alpha$ when the recess has a regular four-sided pyramid shape is shown in Fig. 1.

"Sphere" in the above severed sphere is a concept including a spheroid as well. Further, the above multi-sided pyramid shape, truncated multi-sided pyramid shape, conical shape or truncated conical shape may be a shape cut by one or more planes nonparallel to a plane having the opening of the recess thereon, and the above severed sphere shape may be a shape cut by one or more planes parallel or nonparallel to a plane having the opening of the severed sphere thereon. When these recesses have a shape having sides or vertexes, they may be distinct sides or vertexes, or these recesses may have a rounded shape without distinct sides or vertexes.

When the above recess has a multi-sided pyramid shape or truncated multi-sided pyramid shape, the polygonal shape of the opening of the recess is preferably a triangle, rectangle or hexagon, more preferably a regular triangle, square or regular hexagon.

When the above recess has a multi-sided pyramid shape or truncated multi-sided pyramid shape, the size of the recess, i.e. the length of one side of the polygonal opening is preferably 10 to 100 $\mu$m, and the depth is preferably 0.5 to 300 $\mu$m. When the above recess has a conical shape or truncated conical shape, the size of the recess, i.e. the diameter of the circular opening is preferably 10 to 100 $\mu$m, and the depth is preferably 5 to 50 $\mu$m.

When the recess has a severed sphere shape, the size of the recess, i.e. the diameter of the circular opening is preferably 10 to 100 $\mu$m, and the depth is preferably 5 to 50 $\mu$m. Further, the relationship between the curvature radius of the severed-sphere-shaped recess, i.e. the curvature radius r of a curved section in a cross-section obtained by cutting the recess by a plane passing through the center of the circular opening of the severed-sphere-shaped recess and perpendicular to the opening plane and the depth d of the recess is preferably d $\geq$ 0.18r. In the above range, periodic brightness nonuniformity can be reduced more effectively. Although the upper limit of the depth d is not limited, it is preferably 2r $\geq$ d in view of formativeness. The severed-sphere-shaped recess is particularly preferably a hemispherical recess.

The resin sheet of the present invention has the above recesses formed on one surface thereof and satisfies at least one of the following conditions (1) and (2).

(1) The above recesses form a number of row groups, wherein each row group which constitute the number of row groups comprises a number of rows adjacent to each other, each row comprises the recesses arranged in a line, and each row group is adjacent to other row groups via areas free of the recesses.
(2) Severed-sphere-shaped projections are formed on the surface opposite to the surface having the above recesses formed thereon.

In the above condition (1), the recesses formed on one surface form a number of row groups. Each row group which constitute the number of row groups comprises a number of rows, and each row comprises a number of the recesses. The recesses are arranged in a line to form a row. In this regard, the recesses are preferably arranged in a line nearly parallel to the long side direction or short side direction of the resin sheet to form a row. A number of such rows exist adjacent to each other and constitute one row group. Further, each row group is adjacent to other row groups, preferably nearly parallel to the other row groups, via areas free of the above recesses, and similarly, the other row groups are adjacent to still other row groups, preferably nearly parallel to the still other row groups, via areas free of the recesses.

When the recesses are arranged in a line to form a row, adjacent recesses may be in contact with or distant from each other. When the adjacent recesses are in contact with each other, they may be in contact with each other by sharing a point of the shape of the opening of the recess, and when the shape of the opening is a polygon, they may be in contact with each other by sharing a side of the opening. The distance between the centers of gravity of the shapes of the openings of the adjacent recesses is preferably 10 to 100 $\mu$m. Further, the same applies to the relationship between each recess and the nearest recess belonging to another row adjacent to a row to which the recess belongs.

The percentage of the total area of the openings of the recesses with respect to the area of each row group is preferably 70 to 100%, more preferably 75 to 100%.

Fig. 2 shows one example of the configuration of a plurality of row groups on one surface of the resin sheet of the present invention. In this example, a configuration comprising three row groups is presented. Recesses indicated by circles are arranged in a line in the transverse direction of the drawing to form a row. Each row is adjacent to other rows, nearly parallel to the other rows, and forms a row group whose width is w. A first row group shown at the top of Fig. 2 is adjacent to a second row group shown in the middle of Fig. 2, nearly parallel to the second row group, via a recess-free area located under the first row group. In this case, the distance between the center line of the first row group and the center line of the second row group is represented by L. The same applies to the relationship between the second row group and a third row group.

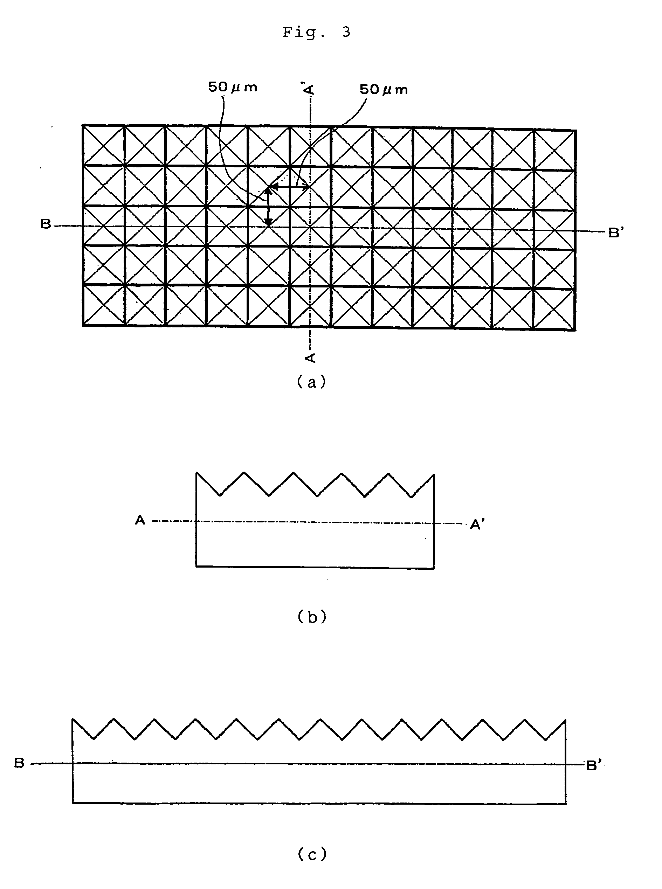

Figs. 3 to 5 show examples of the aligned states of recesses in each row group.

Fig. 3a is a diagram showing the aligned state of square-pyramid-shaped recesses whose opening has a side of 50 $\mu$m, viewed from the side on which the recesses are opened. In Fig. 3a, the recesses are adjacent to each other in the transverse direction of the drawing such that a recess shares a side of its square opening with an adjacent recess and form a row. Further, each row is positioned adjacent and parallel to other rows to form a row group comprising 5 rows. An A-A' cross-section and B-B' cross-section of this row group are shown in Figs. 3b and 3c, respectively.

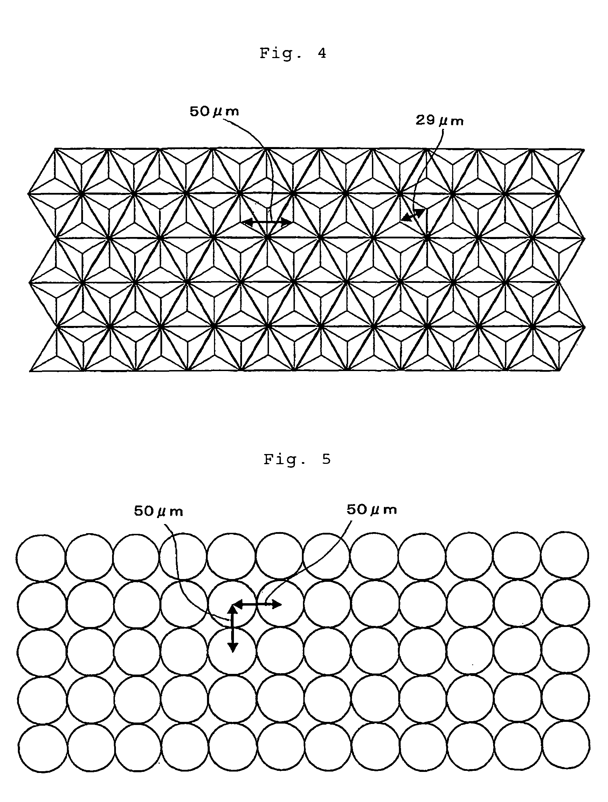

Fig. 4 shows an example when the opening is a triangle having a side of 50 $\mu$m. The recesses are adjacent to each other such that a vertex of the triangular opening of a recess and the corresponding vertex of the triangular opening of an adjacent recess point in the opposite direction in a vertical direction and the recess shares a side of the opening with the adjacent recess and form a row. The distance between the centers of gravity of two adjacent triangles is 29 $\mu$m. Each row is positioned adjacent and parallel to other rows to form a row group comprising 5 rows.

Fig. 5 shows an example of conical recesses each having an opening of 50 $\mu$m in diameter. The recesses are arranged in the transverse direction such that the circular opening of a recess shares a point on the circle with the circular opening of an adjacent recess and form a row. Each row is adjacent to other rows such that each of the circles constituting the row shares a point on the circle with the nearest circles belonging to adjacent rows to form a row group comprising 5 rows.

The aligned state of the recesses in each row group is not limited to those shown in Figs. 3 to 5. For example, when the recesses have a four-sided pyramid shape or three-sided pyramid shape, the recesses may be arranged such that a recess shares a vertex of its opening with an adjacent recess. Further, regardless of the shape of the opening of the recess, the recesses do not always have to be adjacent to each other without any space therebetween and may be adjacent to each other with some space therebetween.

The relationship between the width w of each row group and the distance L between the center lines of two adjacent row groups preferably satisfies the following expression:

$$0.45 \leq w/L \leq 0.9,$$

and more preferably satisfies the following expression:

$$0.55 \leq w/L \leq 0.9.$$

Although the above area free of the recesses between the row groups may not have any recesses or projections formed therein, a group of fine prism-shaped recesses in the direction nearly perpendicular to the center line of the row group may be formed in the area.

In the above condition (2), severed-sphere-shaped projections are formed on the surface opposite to the surface having the above recesses formed thereon. As for the size of the projection, it preferably has a diameter of its bottom surface of 5 to 100 $\mu$m and a height of 2.5 to 50 $\mu$m. The shape of the projection is preferably hemispherical. The projections are preferably present all over the sheet, and the occupancy of the projections is preferably 50 to 100%, more preferably 70 to 100%, in terms of the percentage of area occupied by the bottom surfaces of the projections to the area of the surface of the sheet.

Although the severed-sphere-shaped projections may be present on the entire surface of the sheet with the same size and at regular intervals, projections of different sizes may be formed and placed at irregular intervals. By disrupting uniformity in at least one of the size and arrangement of the projections, moire fringes are hardly formed between a light diffusion plate and a light adjusting film or a liquid crystal panel when the resin sheet of the present invention is used as the light diffusion plate.

When the resin sheet of the present invention satisfies the condition (2), the above recesses formed on one surface (surface opposite to the surface having the projections formed thereon) of the sheet may form row groups as in the above condition (1) or may not form row group. When the recesses do not form row groups, the recesses are preferably formed all over a surface of the sheet. The arrangement of the recesses in this case is similar to that of recesses in each row group area when the recesses satisfy the above condition (1).

The resin sheet of the present invention preferably satisfies the above conditions (1) and (2) simultaneously.

As a material which constitutes the resin sheet of the present invention, a thermoplastic resin is preferred. Illustrative examples thereof include a polycarbonate resin, polyester resin, (meth)acrylic resin, norbornene-based resin, resin having an alicyclic structure, and olefin (co)polymer. The material which constitutes the resin sheet of the present invention may contain a light diffusing agent, ultraviolet absorber and other additives in such amounts that do not impair the effect of the present invention. Further, the resin sheet of the present invention may have a protective film.

The above polycarbonate resin is generally obtained by reacting a dihydric phenol with a carbonate precursor by interfacial polymerization or melt polymerization. Representative examples of the dihydric phenol include 2,2-bis(4-hydroxyphenyl)propane (commonly known as "bisphenol A"), 2,2-bis{(4-hydroxy-3-methyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)cyclohexane, 1,1-bis(4-hydroxyphenyl)-3,3,5-trimethylcyclohexane, 9,9-bis{(4-hydroxy-3-methyl)phenyl}fluorene, and $\alpha,\alpha'$-bis(4-hydroxyphenyl)-m-diisopropyl benzene. Of these, bisphenol A is preferred. These dihydric phenols can be used alone or in admixture of two or more.

As the carbonate precursor, carbonyl halide, carbonate ester or haloformate is used. Specific examples thereof include phosgene, diphenyl carbonate and dihaloformate of dihydric phenol.

When the polycarbonate resin is produced by reacting the dihydric phenol with the carbonate precursor by interfacial polymerization or melt polymerization, a catalyst, a terminal blocking agent, an antioxidant for the dihydric phenol and the like may be used as required. Further, the polycarbonate resin may be a branched polycarbonate resin copolymerized with a polyfunctional aromatic compound having three or more functional groups, a polyester carbonate resin copolymerized with an aromatic or aliphatic difunctional carboxylic acid, or a mixture of two or more of obtained polycarbonate resins.

The molecular weight of the polycarbonate resin is generally 10,000 to 40,000, preferably 15,000 to 35, 000, in terms of viscosity average molecular weight. The viscosity average molecular weight in the present specification is determined by inserting specific viscosity ($\eta_{sp}$) determined from a solution prepared by dissolving 0.7 g of the polycarbonate resin in 100 ml of methylene chloride at 20°C into the following expression.

$$\eta_{sp}/c = [\eta] + 0.45 \times [\eta]^2 c$$

$$[\eta] = 1.23 \times 10^{-4} M^{0.83}$$

(wherein c = 0.7, [$\eta$] is intrinsic viscosity.)

To obtain the above polyester resin, an oligomer is obtained from an acid component and a diol component as raw materials by, for example, a direct esterification reaction, and then a polycondensation reaction using antimony trioxide or a titanium compound as a catalyst is carried out.

Illustrative example of the above acid component include an aromatic dicarboxylic acid, alicyclic dicarboxylic acid, and aliphatic dicarboxylic acid. Specific examples of the aromatic dicarboxylic acid component include terephthalic acid, isophthalic acid, phthalic acid, 1,4-naphthalene dicarboxylic acid, 1,5-naphthalene dicarboxylic acid, 2,6-naphthalene dicarboxylic acid, 4,4'-diphenyl dicarboxylic acid, 4,4'-diphenyl ether dicarboxylic acid, and 4,4'-diphenyl sulfone dicarboxylic acid. Specific examples of the alicyclic dicarboxylic acid component include cyclohexane dicarboxylic acid. Specific examples of the aliphatic dicarboxylic acid component include adipic acid, suberic acid, sebacic acid, and dodecanedioic acid. Of these, terephthalic acid and 2,6-naphthalene dicarboxylic acid are preferred.

Illustrative examples of the above diol component include ethylene glycol, 1,2-propanediol, 1,3-propanediol, neopentyl glycol, 1,3-butanediol, 1,4-butanediol, 1,5-pentanediol, 1,6-hexanediol, 1,2-cyclohexane dimethanol, 1,3-cyclohexane dimethanol, 1,4-cyclohexane dimethanol, diethylene glycol, triethylene glycol, polyalkylene glycol, and 2,2'-bis(4'-$\beta$-hydroxyethoxyphenyl)propane. Of these, ethylene glycol and 1,4-butanediol are preferred.

The polyester may be copolymerized with a monofunctional compound such as lauryl alcohol or phenyl isocyanate or a trifunctional compound such as trimellitic acid, pyromellitic acid, glycerol, pentaerythritol or 2,4-dioxybenzoic acid.

As the polyester used in the resin sheet of the present invention, polyethylene terephthalate, polybutylene terephthalate and poly(ethylene-2,6-naphthalate) are preferred.

The above (meth)acrylic resin comprises an alkyl (meth)acrylate or aryl (meth)acrylate as a main component and can be obtained by an appropriate polymerization method such as solution polymerization, emulsion polymerization, bulk polymerization or suspension polymerization in the presence of an appropriate catalyst. Illustrative examples of the alkyl (meth)acrylate include an alkyl (meth)acrylate having an alkyl group which has preferably 1 to 12, more preferably 1 to 8 carbon atoms. Specific examples thereof include methyl (meth)acrylate, ethyl (meth)acrylate, propyl (meth)acrylate, butyl (meth)acrylate, isobutyl (meth)acrylate, hexyl (meth)acrylate, 2-ethylhexyl (meth)acrylate, isooctyl (meth)acrylate, and allyl (meth)acrylate. The alkyl group in the alkyl (meth)acrylate more preferably has 1 to 4 carbon atoms. Illustrative examples of the aryl (meth)acrylate include an aryl (meth)acrylate having an aryl group which has preferably 6 to 12 carbon atoms, and specific examples thereof include phenyl (meth)acrylate. The (meth)acrylic resin may be obtained by copolymerization of these monomers with other monomers. Illustrative examples of such other monomers include vinyl aromatic compounds such as styrene; carboxyl-group-containing monomers such as (meth)acrylic acid; monomers having an acid anhydride group such as maleic anhydride and itaconic anhydride; and epoxy-group-containing monomers such as glycidyl (meth)acrylate. As the (meth)acrylic resin, a homopolymer of (meth)acrylate having a lower alkyl group having 1 to 4 carbon atoms or a copolymer of (meth)acrylate having a lower alkyl group having 1 to 4 carbon atoms and styrene is preferred.

The above norbornene-based resin is a resin described in, for example, JP-A 3-14882, JP-A 3-122137 and International Publication No. 96/10596 pamphlet.

Illustrative examples of raw material monomers (norbornene monomers) for the norbornene-containing resin include norbornene, 5-methyl-2-norbornene, 5-ethyl-2-norbornene, 5-butyl-2-norbornene, 5-ethylidene-2-norbornene, 5-methoxycarbonyl-2-norbornene, 5,5-dimethyl-2-norbornene, 5-cyano-2-norbornene, 5-methyl-5-methoxycarbonyl-2-norbornene, 5-phenyl-2-norbornene, 5-phenyl-5-methyl-2-norbornene, and 1,4-methano-1,4,4a,9a-tetrahydrofluorene. Illustrative examples of the norbornene-based resin include:

(A) a resin resulting from hydrogenation of ring-opened polymer of norbornene monomer,
(B) a resin obtained by subjecting a ring-opened polymer of norbornene monomer to modification such as maleic acid addition or cyclopentadiene addition and then to hydrogenation,
(C) a resin resulting from addition polymerization of norbornene monomer,
(D) a resin resulting from addition polymerization of norbornene monomer and olefin monomer,
(E) a resin resulting from addition polymerization of norbornene monomer and cyclic olefin monomer, and
(F) modified forms of the above resins.

These resins can be produced by conventional methods.

Illustrative examples of the above resin having an alicyclic structure include a polymer of a vinyl aromatic compound and a product resulting from hydrogenation of the double bond (including the aromatic ring) of the polymer, and a product resulting from hydrogenation of the double bond (including the aromatic ring) of a copolymer of a vinyl aromatic compound and other monomer copolymerizable with the vinyl aromatic compound.

Of these, the polycarbonate resin, polyester resin, (meth)acrylic resin, norbornene-based resin or resin having an alicyclic structure is preferred as the material constituting the resin sheet of the present invention.

The above light diffusing agent is preferably fine particles, and illustrative examples thereof include organic fine particles and inorganic fine particles. Specific examples of the organic fine particles include a polystyrene resin, (meth)acrylic resin and silicone resin. Specific examples of the inorganic fine particles include glass fine particles. Of these, the organic fine particles are preferred. Further, from the viewpoint of light diffusibility, the fine particles are preferably spherical. The more spherical the particles become, the more preferable it is.

The organic fine particles are preferably cross-linked organic fine particles. Those which are at least partially cross-liked in their production process and do not undergo deformation which impairs practicality and retain a fine particle state in the production process of the resin sheet of the present invention are preferably used. That is, fine particles which do not melt in the resin even if heated to the molding temperature of the raw material resin of the resin sheet of the present invention (for example, about 350°C in the case of a polycarbonate resin) are more preferred. For example, organic fine particles comprising a cross-linked (meth)acrylic resin or silicone resin are preferred. Specific examples of particularly suitable organic fine particles include polymer fine particles based on partially cross-linked methyl methacrylate, a polymer comprising a poly (butyl acrylate) as a core and a poly(methyl methacrylate) as a shell, a polymer having core/shell morphology comprising a rubber-like vinyl polymer as a core and a shell (for example, Pararoid EXL-5136 of Rohm & Haas Company), and a silicone resin having a cross-linked siloxane bond (for example, Tospearl 120 of GE Toshiba Silicone Co., Ltd.).

The average particle diameter of the above particulate light diffusing agent is preferably 0.1 to 50 $\mu$m, more preferably 0.5 to 30 $\mu$m, much more preferably 1 to 20 $\mu$m. The particle diameter of the light diffusing agent is a weight average particle diameter measured by a Cole counter method, and a measurement device therefor is a particle number/particle distribution analyzer MODEL Zm of Nikkaki Bios Co., Ltd. Use of a light diffusing agent having a weight average particle diameter in this range has an advantage that since sufficient light diffusibility is attained by addition of such a light diffusing agent in a small amount, periodic brightness nonuniformity can be reduced more effectively without impairing a surface emitting property.

Although the amount of the light diffusing agent contained in the resin sheet of the present invention is preferably not larger than 2.0 wt%, this value varies according to the kind of the light diffusing agent used. For example, in the case of the above Pararoid EXL-5136 of Rohm & Haas Company, it is preferably not larger than 2.0 wt%, while in the case of Tospearl 120 of GE Toshiba Silicone Co., Ltd., it is preferably not larger than 0.45 wt%.

When the resin sheet of the present invention is used as a light diffusion plate for a direct backlight unit, it may contain an ultraviolet absorber to prevent discoloration caused by intermittent or continuous exposure to light of various wavelength distributions ranging from the ultraviolet range to the visible light range and various intensities from light sources over a long time.

Illustrative examples of the ultraviolet absorber include a benzophenone compound, benzotriazole compound, benzoxazine compound, hydroxyphenyl triazine compound, and polymer-type ultraviolet absorber.

Specific examples of the above benzophenone compound include 2,4-dihydroxy benzophenone, 2-hydroxy-4-methoxy benzophenone, 2-hydroxy-4-octoxy benzophenone, 2-hydroxy-4-benzyloxy benzophenone, 2-hydroxy-4-methoxy-5-sulfoxy benzophenone, 2-hydroxy-4-methoxy-5-sulfoxy trihydrate benzophenone, 2,2'-dihydroxy-4-methoxy benzophenone, 2,2',4,4'-tetrahydroxy benzophenone, 2,2'-dihydroxy-4,4'-dimethoxy benzophenone, 2,2'-dihydroxy-4,4'-dimethoxy-5-sodium sulfoxy benzophenone, bis(5-benzoyl-4-hydroxy-2-methoxyphenyl)methane, 2-hydroxy-4-n-dodecyloxy benzophenone, and 2-hydroxy-4-methoxy-2'-carboxy benzophenone.

Specific examples of the above benzotriazole compound include 2-(2-hydroxy-5-methylphenyl)benzotriazole, 2-(2-hydroxy-5-t-octylphenyl)benzotriazole, 2-(2-hydroxy-3,5-dicumylphenyl)phenyl benzotriazole, 2-(2-hydroxy-3-t-butyl-5-methylphenyl)-5-chlorobenzotriazole, 2,2'-methylenebis[4-(1,1,3,3-tetramethylbutyl)-6-(2H-benzotriazole-2-yl) phenol], 2-(2-hydroxy-3,5-di-t-butylphenyl)benzotriazole, 2-(2-hydroxy-3,5-di-t-butylphenyl)-5-chlorobenzotriazole, 2-(2-hydroxy-3,5-di-t-amylphenyl)benzotriazole, 2-(2-hydroxy-5-t-octylphenyl)benzotriazole, 2-(2-hydroxy-5-t-butylphenyl)benzotriazole, 2-(2-hydroxy-4-octoxyphenyl)benzotriazole, 2,2'-methylenebis(4-cumyl-6-benzotriazole phenyl), 2,2'-p-phenylenebis(1,3-benzoxazine-4-one), and 2-[2-hydroxy-3-(3,4,5,6-tetrahydrophthalimidemethyl)-5-methylphenyl] benzotriazole. Of these, 2-(2-hydroxy-5-t-octylphenyl)benzotriazole, 2-(2-hydroxy-3,5-dicumylphenyl)phenyl benzotriazole, 2-(2-hydroxy-3-t-butyl-5-methylphenyl)-5-chlorobenzotriazole or 2,2'-methylenebis[4-(1,1,3,3-tetramethylbutyl)-6-(2H-benzotriazole-2-yl)phenol] is preferred.

Specific examples of the above benzoxazine compound include 2,2'-p-phenylenebis(3,1-benzoxazine-4-one), 2,2'-m-phenylenebis(3,1-benzoxazine-4-one), and 2,2'-p,p'-diphenylenebis(3,1-benzoxazine-4-one).

Specific examples of the above hydroxyphenyl triazine compound include 2-(4,6-diphenyl-1,3,5-triazine-2-yl)-5-hexyloxyphenol, 2-(4,6-diphenyl-1,3,5-triazine-2-yl)-5-methyloxyphenol, 2-(4,6-diphenyl-1,3,5-triazine-2-yl)-5-ethyloxyphenol, 2-(4,6-diphenyl-1,3,5-triazine-2-yl)-5-propyloxyphenol, and 2-(4,6-diphenyl-1,3,5-triazine-2-yl)-5-butyloxyphenol. Further, compounds resulting from substituting the phenyl groups in the compounds enumerated above with a 2,4-dimethylphenyl group such as 2-(4,6-bis(2,4-dimethylphenyl)-1,3,5-triazine-2-yl) -5-hexyloxyphenol are also named.

Illustrative examples of the above polymer-type ultraviolet absorber include a copolymer of at least one of an ultraviolet absorbing monomer and a photostable monomer with other monomer. Suitable examples of the above ultraviolet absorbing monomer include a compound containing a benzotriazole structure, benzophenone structure, triazine structure or benzoxazine structure in the ester substituent of (meth)acrylate. Illustrative examples of the other monomer include an alkyl (meth)acrylate.

These ultraviolet absorbers can be used alone or in combination of two or more.

Of the above ultraviolet absorbers, at least one ultraviolet absorber selected from the group consisting of a benzophenone-based ultraviolet absorber, a benzotriazole-based ultraviolet absorber and a benzoxazine-based ultraviolet absorber is preferably used.

The amount of the ultraviolet absorber contained in the resin sheet of the present invention is preferably 0 to 0.5 part by weight, more preferably 0 to 0.3 part by weight, based on 100 parts by weight of the material constituting the resin sheet, when the resin sheet has a protective film to be described later. Meanwhile, when the resin sheet does not have the protective film, the amount of the ultraviolet absorber is preferably 0.01 to 2 parts by weight, more preferably 0.02 to 1 part by weight, based on 100 parts by weight of the material constituting the resin sheet. When the content of the ultraviolet absorber exceeds 2 parts by weight, the resin sheet of the present invention may undergo degeneration.

Illustrative examples of the above other additives include a fluorescent brightening agent, thermal stabilizer, release agent, bluing agent, flame retardant, and flame retardant aid.

The above fluorescent brightening agent can be added to improve the color of the resin to white or bluish white and to improve the brightness of the light diffusion plate of the present invention. The fluorescent brightening agent has a function of absorbing the energy of the ultraviolet portion of light and radiating the energy to the visible portion.

Illustrative examples of the fluorescent brightening agent include a stilbenzene compound, benzimidazole compound, benzoxazole compound, naphthalimide compound, rhodamine compound, coumarin compound, and oxazine compound. Of these, the benzoxazole compound or the coumarin compound is preferred. These fluorescent brightening agents can be used alone or in combination of two or more. Illustrative examples of their commercial products include Kayalight OS (CI Fluorescent Brightener 219:1, benzoxazole compound) of NIPPON KAYAKU CO., LTD., HAKKOL PSR (coumarin compound) of HAKKOL CHEMICAL CO., LTD., and EASTOBRITE OB-1 of Eastman Chemical Company.

When the fluorescent brightening agent is used, its amount is preferably 0.0001 to 3 parts by weight, more preferably 0.0002 to 0.5 parts by weight, much more preferably 0.0003 to 0.1 part by weight, particularly preferably 0.0005 to 0.05 part by weight, based on 100 parts by weight of the material constituting the resin sheet of the present invention. When the fluorescent brightening agent is used in the above amount, a resin sheet having satisfactory surface emission, improved color of light emitting surface and no color nonuniformity is obtained advantageously.

The above thermal stabilizer can be used to prevent a decrease in the molecular weight of the raw material resin and degradation in the color of the raw material resin, when the resin sheet of the present invention is molded. Illustrative examples of the thermal stabilizer include phosphorous acid, phosphoric acid, phosphonous acid and phosphonic acid, and their esterified products.

Specific examples thereof include triphenyl phosphite, tris(nonylphenyl)phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, tris(2,4-di-t-butylphenyl)phosphite, bis(2,6-di-t-butyl-4-methylphenyl)pentaerythritol diphosphite, 2,2-methylenebis(4,6-di-t-butylphenyl)octyl phosphite, bis(nonylphenyl)pentaerythritol diphosphite, bis(2,4-di-t-butylphenyl)pentaerythritol diphosphite, distearyl pentaerythritol diphosphite, tributyl phosphate, triethyl phosphate, trimethyl phosphate, triphenyl phosphate, diphenyl monooxoxenyl phosphate, dibutyl phosphate, dioctyl phosphate, diisopropyl phosphate, tetrakis(2,4-di-i-propylphenyl)-4,4'-biphenylene diphosphonite, tetrakis(2,4-di-n-butylphenyl)-4,4'-biphenylene diphosphonite, tetrakis(2,4-di-t-butylphenyl)-4,4'-biphenylene diphosphonite, tetrakis(2,4-di-t-butylphenyl)-4,3'-biphenylene diphosphonite, tetrakis(2,4-di-t-butylphenyl)-3,3'-biphenylene diphosphonite, tetrakis(2,6-di-iso-propylphenyl)-4,4'-biphenylene diphosphonite, tetrakis(2,6-di-n-butylphenyl)-4,4'-biphenylene diphosphonite, tetrakis(2,6-di-t-butylphenyl)-4,4'-biphenylene diphosphonite, tetrakis(2,6-di-t-butylphenyl)-4,3'-biphenylene diphosphonite, tetrakis(2,6-di-t-butylphenyl)-3,3'-biphenylene diphosphonite, bis(2,4-di-t-butylphenyl)biphenyl phosphonite, dimethyl benzenephosphonate, diethyl benzenephosphonate, and dipropyl benzenephosphonate. Of these, tris(2,4-di-t-butylphenyl)phosphite, distearyl pentaerythritol diphosphite, trimethyl phosphate, tetrakis(2,4-di-t-butylphenyl)-4,4'-biphenylene diphosphonite or bis(2,4-di-t-butylphenyl)biphenyl phosphonite is preferred.

These thermal stabilizers may be used alone or in admixture of two or more. The thermal stabilizer is used in an amount of preferably 0.001 to 0.5 part by weight based on 100 parts by weight of the raw material resin constituting the resin sheet.

The above release agent can be added to improve releasability from a metal roll when the resin sheet of the present invention is, for example, extruded. As such a release agent, a fatty acid ester compound can be suitably used, for example. The fatty acid ester compound is preferably a partial ester or whole ester of monohydric or polyhydric alcohol having 1 to 20 carbon atoms and saturated fatty acid having 10 to 30 carbon atoms. Illustrative examples of the partial ester or whole ester of the monohydric or polyhydric alcohol and the saturated fatty acid include monoglyceride stearate, diglyceride stearate, triglyceride stearate, monosorbitate stearate, monoglyceride behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate. Of these, monoglyceride stearate, triglyceride stearate and pentaerythritol tetrastearate are preferably used. When the release agent is used, it is used in an amount of preferably 0.001 to 0.5 parts by weight based on 100 parts by weight of the material constituting the resin sheet of the present invention.

The resin sheet of the present invention may have a protective film on its surface which faces light sources when the resin sheet of the present invention is used as a light diffusion plate for a direct backlight unit. A preferred thickness of the protective film varies depending on a method of forming the protective film. For example, it is preferably 0.1 to 500 $\mu$m, more preferably 1 to 100 $\mu$m, much more preferably 2 to 70 $\mu$m. The smaller the thickness of the protective film becomes within this range, the less apparent a problem of warpage of the resin sheet due to a difference in thermal shrinkage or water absorption between the protective film and the resin sheet becomes. Preferred thickness for each method of forming the protective film will be described later.

As a material which constitutes the protective film, a thermoplastic resin, a thermosetting resin or an elastomer can be used.

Illustrative examples of the above thermoplastic resin include a (meth)acrylic resin, polycarbonate resin, olefin (co)polymer resin and polyester resin. As the (meth)acrylic resin, methyl (meth)acrylate, ethyl (meth)acrylate, propyl (meth)acrylate, butyl (meth)acrylate, isobutyl (meth)acrylate, hexyl (meth)acrylate, 2-ethylhexyl (meth)acrylate or phenyl (meth)acrylate is preferred. As the olefin (co)polymer, polyethylene resin is preferred. As the polyester resin, a polyethylene terephthalate resin, a polybutylene terephthalate resin or a polyethylene naphthalate resin is preferred.

Illustrative examples of the above thermosetting resin include a melamine resin, silicone resin, and a (meth)acrylic thermosetting resin.

Illustrative examples of the above elastomer include a polyester elastomer.

The protective film preferably contains an ultraviolet absorber. Ultraviolet absorbers which can be contained in the protective film are the same as those enumerated as the above ultraviolet absorbers which can be contained in the resin sheet of the present invention. When the protective film contains the ultraviolet absorber, its content is preferably 0.1 to 50 wt%, more preferably 0.5 to 40 wt%, much more preferably 1 to 30 wt% of the whole protective film. When the resin sheet of the present invention is used as a light diffusion plate for direct backlight with the ultraviolet absorber contained in the protective film, deterioration of the resin sheet by light from backlight light sources can be inhibited effectively, and a reduction in brightness and a change in color in a backlight unit can be prevented. Since deterioration of the resin by light from backlight light sources progresses from the surface on the backlight light source side of the resin sheet, it is important to render the concentration of the ultraviolet absorber high on the surface on the backlight light source side. From this viewpoint, the resin sheet of the present invention preferably has a protective film containing an ultraviolet absorber on its surface on the light source side.

Production Method of Resin Sheet

To produce the resin sheet of the present invention, a resin or a resin composition containing a desired additive in a resin is prepared first as a material which constitutes the resin sheet of the present invention. The resin composition can be prepared by a conventional method. Then, the prepared resin or resin composition is molded into a sheet. As the molding method, melt extrusion, injection molding or the like is preferably employed. The former melt extrusion is a method comprising melt-extruding the resin or resin composition into a sheet from a T die, holding and pressing the sheet by a plurality of cooling rolls and taking up the pressed sheet by a take-up roll. The number of the cooling rolls is preferably 2 or more, more preferably 2 to 4.

As a method of forming recesses on one surface of the resin sheet or forming, when the resin sheet of the present invention satisfies the above condition (2), recesses on one surface of the resin sheet and projections on the other surface, a method comprising pressing a melt-extruded resin sheet between cooling rolls having reversed shapes of desired recesses or projections on the surfaces thereof or a method comprising placing the resin sheet between plates having reversed shapes of desired recesses or projections on the surfaces thereof preferably under reduced pressure, heating the resin sheet to at least the thermal deformation temperature of the raw material resin of the sheet and then pressing the sheet can be used. The production method of the resin sheet which is proposed in the present invention is not limited to these examples.

When the resin sheet of the present invention has a protective film, the protective film may be laminated on the sheet by the following methods (i) to (v), for example.

(i) lamination method comprising melt-extruding a material to be the protective film onto the extruded resin sheet from a T die.
(ii) method comprising laminating the protective film continuously on a surface of the resin sheet by use of a heating roll or the like during the production process of the sheet.
(iii) co-extrusion method comprising melt-extruding a resin or resin composition to be the resin sheet and a material to be the protective film simultaneously to laminate the sheet and the film.
(iv) coating method comprising laminating the protective film on the sheet by use of a coating containing a material to be the protective film.
(v) method comprising transferring the protective film onto the resin composition sheet by use of transfer foil having the protective film.

When the above method (i), (ii) or (iii) is employed, the material constituting the protective film is preferably a thermoplastic resin, more preferably a (meth)acrylic resin or a polycarbonate resin out of the thermoplastic resins. When the protective film is formed by the method (i), (ii) or (iii), the thickness of the protective film is preferably 10 to 500 $\mu$m, more preferably 20 to 100 $\mu$m.

Illustrative examples of a coating method which can be employed in the above method (iv) include dip coating, flow coating, and roll coating. When the method (iv) is employed, the material constituting the protective film is preferably a thermoplastic resin or a thermosetting resin, more preferably a (meth) acrylic resin or a polycarbonate resin as the thermoplastic resin or a melamine resin, a silicone resin or a (meth) acrylic thermosetting resin as the thermosetting resin. The thickness of the protective film when the method (iv) is employed is preferably 0.1 to 20 $\mu$m, more preferably 1 to 10 $\mu$m.

When the above method (v) is employed, transfer foil having a multilayer structure comprising a base film, a release layer, a protective layer, a protective film layer and an adhesive layer is preferably used. By applying the adhesive layer of the transfer foil to the resin sheet and removing the base film together with the release layer, the resin sheet having the adhesive layer, the protective film layer and the protective layer transferred thereon in this order can be obtained.

When the resin sheet of the present invention has the protective film, the above recesses and projections are preferably formed after the protective film is placed on the resin sheet.

The thus produced resin sheet of the present invention can be suitably used as a light diffusion plate for a direct backlight unit.

Direct Backlight Unit

A direct backlight unit of the present invention has a light diffusion plate comprising at least a number of linear light sources and the above resin sheet. The direct backlight unit of the present invention may further comprise light adjusting films as required.

The above linear light source may be any linear light source which can be placed directly under the luminescent surface of the backlight unit and can emit visible light. For example, an incandescent lamp, a fluorescent discharge tube, a light-emitting diode or a fluorescent light-emitting device can be used, and the fluorescent discharge tube, particularly a cold cathode fluorescent lamp, is preferred from the viewpoints of brightness, color temperature and the like. Particularly, recently, a cold cathode fluorescent lamp which consumes less electric power and uses a three-wavelength phosphor with high brightness and high color rendition is preferably used. The cold cathode fluorescent lamp is such that proper amounts of mercury and inert gas (such as argon, neon or a mixed gas) are filled in a glass tube having its inner wall coated with fluorescent and columnar electrodes are attached to both ends of the glass tube. When a high voltage is applied between the electrodes, a small number of electrons present in the tube are attracted to and collide with the electrodes at high speed, whereby secondary electrons are emitted and electric discharge is started. By this electric discharge, electrons attracted to the anode and mercury molecules in the tube collide with each other, whereby ultraviolet radiation having a wavelength of around 250 nm is emitted, and this ultraviolet radiation excites the fluorescent, resulting in emission of visible light.

The linear light sources are preferably arranged in parallel at nearly equal intervals. The number of the linear light sources may be any number and can be 6 to 50, for example. The linear light sources are housed in a case having an opened top face, and the inner wall of the case is preferably coated with a highly reflective coating or a highly reflective film agent.

By placing a light diffusion plate comprising the resin sheet of the present invention in the opening of the above case housing the linear light sources, the direct backlight unit of the present invention can be obtained. The resin sheet is placed in the opening of the case such that its surface having recesses formed thereon faces the inside (linear light source side).

When the resin sheet of the present invention satisfies the above condition (1), the distance L between the center lines of two adjacent row groups out of row groups formed by recesses on one surface of the resin sheet preferably matches the distance between the central axes of two adjacent linear light sources. Further, the center line of each row group is preferably positioned in parallel to the central axis of the linear light source and positioned nearly directly above the central axis of the nearest linear light source. Further, the relationship among the width w of each row group formed by recesses on one surface of the resin sheet, the distance L between the center lines of two adjacent row groups and the distance h between the surface on the linear light source side of the resin sheet and the central axis of the linear light source preferably satisfies the following expression:

$$0.05 \leq (L-w)/h \leq 1.0,$$

and more preferably satisfies the following expression:

$$0.05 \leq (L-w)/h \leq 0.8.$$

The direct backlight unit of the present invention has high brightness uniformity and improved front brightness. Thus, it can exhibit high performance without some or all of light adjusting films which have so far been used to improve brightness.

Direct Backlight Type Liquid Crystal Display

A direct backlight type liquid crystal display of the present invention comprises at least the direct backlight unit of the present invention, light adjusting films and a liquid crystal panel.

The light adjusting films are preferably positioned on the liquid crystal panel side of the direct backlight unit of the present invention, i.e. between the light diffusion plate and the liquid crystal panel. Illustrative examples of such light adjusting films include a light collecting film, a diffusion film and a polarizing film. Illustrative examples of the above light collecting film include a light collecting film called "prism sheet" having prisms on a surface thereof (e.g. BEF of YAMAGATA 3M CO., LTD.). Illustrative examples of the above diffusion film include a film containing a diffusing agent. Illustrative examples of the above polarizing film include a reflective polarizing film (e.g. D-BEF of YAMAGATA 3M CO., LTD.). These light adjusting films may be placed in the order of the diffusion film, light collecting film and polarizing film from the light diffusion plate side, for example.

The direct backlight type liquid crystal display of the present invention can exhibit high brightness uniformity and front brightness without, for example, the diffusion film or the diffusion film and the light collecting film, out of these light adjusting films.

The above liquid crystal panel has a polarizing plate on at least one surface of a liquid crystal cell. The liquid crystal cell preferably has a structure that two transparent substrates each having a transparent electrode and an oriented film face each other via a gap (cell gap) with their peripheral portions sealed and liquid crystal is filled in the cell gap partitioned by the inner surfaces of the substrates and a sealing agent. Illustrative examples of the above substrates include glass and resins. Illustrative examples of the above liquid crystal include nematic liquid crystal and smectic liquid crystal. Of these, the nematic liquid crystal is preferred. For example, Schiff-base liquid crystal, azoxy liquid crystal, biphenyl liquid crystal, phenyl cyclohexane liquid crystal, ester liquid crystal, terphenyl liquid crystal, biphenyl cyclohexane liquid crystal, pyrimidine liquid crystal, dioxane liquid crystal, bicyclooctane liquid crystal, and cubane liquid crystal are used.

Further, to these liquid crystals, cholesteric liquid crystal such as cholesteryl chloride, cholesteryl nonaate or cholesteryl carbonate or a chiral agent such as those sold under trade names "C-15" and "CB-15" (products of Merck Ltd.) can be added. Further, ferroelectric liquid crystal such as p-decyloxybenzylidene-p-amino-2-methylbutyl cinnamate can also be used. Illustrative examples of the above polarizing plate include a polarizing plate comprising a polarizing film called "H film" prepared by having polyvinyl alcohol absorb iodine while stretching and orienting the polyvinyl alcohol and cellulose acetate protective films which sandwich the polarizing film and a polarizing plate comprising the H film.

The liquid crystal panel used in the present invention may have a structure that a color filter is placed between the liquid crystal cell and the polarizing plate as desired.

Examples

Hereinafter, the present invention will be further described with reference to Examples. Measurement methods of the average brightness, brightness planar distribution and brightness angular distribution of light diffusion plate are as follows. Measurements of Average Brightness, Brightness Planar Distribution and Brightness Angular Distribution of Light Diffusion Plate

To measure the average brightness, brightness planar distribution and brightness angular distribution of light diffusion plate, a brightness chromaticity measuring system "ORDL-001/-002" of Ohno Research & Development Laboratories Co., Ltd. was used, a brightness meter "BM-7" of Topcon Corporation was used as a brightness meter, and a 26-inch direct backlight was used as a backlight. Fig. 6 shows a schematic view of an evaluation apparatus, and Fig. 7 shows a method for evaluating average brightness and brightness nonuniformity.

The above backlight is a backlight comprising a plurality of linear cold cathode fluorescent lamps 3 to 8, the distance between the central axes of two adjacent lamps is 25 mm, and the distance h between the lamps and the surface on the lamp side of the light diffusion plate is 12 mm. Further, the cold cathode fluorescent lamps are housed in a case 2 whose inside is coated with a highly reflective coating. Each light diffusion plate 1 used for measurements had a length of 150 mm, a width of 300 mm and a thickness of 2 mm. The light diffusion plate was incorporated into the central part of the backlight such that its long-side direction was parallel to the longitudinal direction of the lamp. A brightness meter 14 was scanned above the light diffusion plate in the direction perpendicular to the longitudinal direction of the lamp to measure distribution of brightness ($cd/m^2$), and its average value was taken as average brightness (Ave.). Further, a value (W/Ave.) resulting from dividing the amplitude (W) of brightness distribution which appears as the influence of the cold cathode fluorescent lamp by the average brightness was evaluated as brightness nonuniformity. Brightness angular distribution was measured by a method of measuring brightness by scanning the brightness meter 14 in an arc in such a manner that an angle formed by a straight line which connects the central point of the light diffusion plate which is a measurement point with the brightness meter 14 and the surface of the light diffusion plate is changed on a surface perpendicular to the surface of the light diffusion plate and parallel to the longitudinal direction of the lamp.

Examples 1 to 13 and Comparative Examples 1 to 3

As a polycarbonate (PC) resin sheet, a polycarbonate resin composition was prepared by mixing 100 parts by weight of polycarbonate resin obtained from bisphenol A and phosgene by interfacial polymerization and having a viscosity average molecular weight of 24,300 with 0.3 parts by weight of benzotriazole compound ["KEMISORB 79" of CHEMIPRO KASEI KAISHA, LTD., 2-(2'-hydroxy-5'-t-octylphenyl)benzotriazole] as an ultraviolet absorber. Then, after the above polycarbonate resin composition was melt-kneaded by use of a vented extruder having an inner diameter of 120 mm, it was extruded, through a T die, into a polycarbonate resin sheet having a thickness of 2 mm.

Next, to form fine shapes on the surface on the light source side of a light diffusion plate, a 300-$\mu$m-thick nickel stamper having a number of row groups comprising four-sided-pyramid-shaped, three-sided-pyramid-shaped or hemispherical projections formed on a surface thereof was prepared. Each of the above row groups has width w shown in Table 1, the distance L between the center lines of the widths of two adjacent row groups is shown in Table 1, the projections in each row group are continuous at the distance between the centers of gravity shown in Table 1, and their arrangement matched the arrangement shown in any of Figs. 3 to 5 according to the shape of the projections. At the same time, to form fine shapes on the surface on the liquid crystal panel side of the light diffusion plate, a 300-$\mu$m-thick nickel stamper having hemispherical recesses each having a diameter of 50 $\mu$m formed continuously over a surface thereof at a distance between the centers of gravity of 50 μm was also prepared.

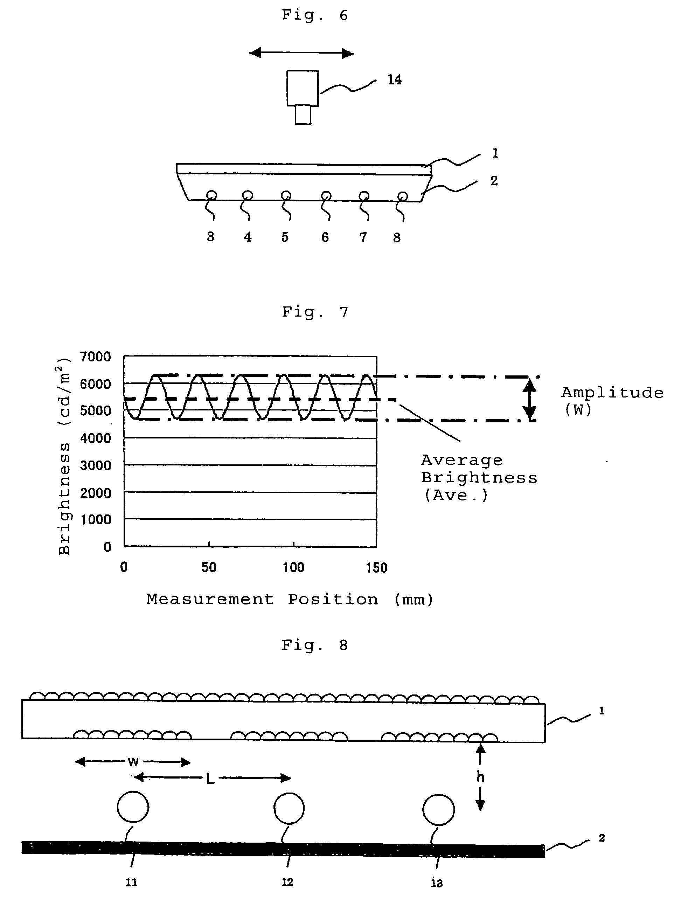

Fine shapes were formed on the polycarbonate resin sheet by holding a sheet cut to a size of 150 mm in length and 300 mm in width between the two stampers prepared above for the surface on the light source side and the surface on the liquid crystal panel side and heating the sheet to 150°C and then pressing the sheet at a pressure of 40 ton in a container having a vacuum degree of 10 kPa. In Example 5, a nickel plate having no recesses and projections on the surfaces thereof was used in place of the stamper for the liquid crystal panel side. Fig. 8 shows a schematic sectional view of the prepared backlight unit.

In Examples 1 to 10 and Comparative Examples 2 and 3, resin sheets were obtained in the same manner as described above by using the configurations of recesses and row groups shown in Table 1 and evaluated. In Examples 11 to 13, a polymethyl methacrylate (PMMA) resin (ACRYPET VH of Mitsubishi Rayon Co., Ltd.), a ring-opened cycloolefin (COP) resin (ZEONOR 1060R of ZEON CORPORATION) or a copolymerized cycloolefin (COC) resin (TOPAS 6013 of Ticona) was used as a resin, and resin sheets having a length of 150 mm, a width of 300 mm and a thickness of 2 mm were obtained by injection molding, shaped by given stampers in the same manner as described above and evaluated.

In Comparative Example 1, as a typical example of conventionally used light diffusion plates, a light diffusion plate having a total light transmittance of 65%, a haze of 99.3% and a thickness of 2 mm was prepared by further adding 0.4 parts by weight of light diffusing fine particles ("Tospearl 120" of GE Toshiba Silicone Co., Ltd.) comprising a silicone resin having a cross-linked siloxane bond to the above polycarbonate composition and extruding the resulting composition. The above total light transmittance and haze were measured by integrating sphere type total light transmittance measuring instrument "NDH-2000" (C light source) of Nippon Denshoku Industries Co., Ltd. in accordance with JIS K-6735.

In Examples 1 to 13 and Comparative Examples 2 and 3, when the light diffusion plate is incorporated into the above backlight, it is incorporated such that the center line of the width of each row group formed on each light diffusion plate is positioned directly above the central axis of each cold cathode fluorescent lamp.

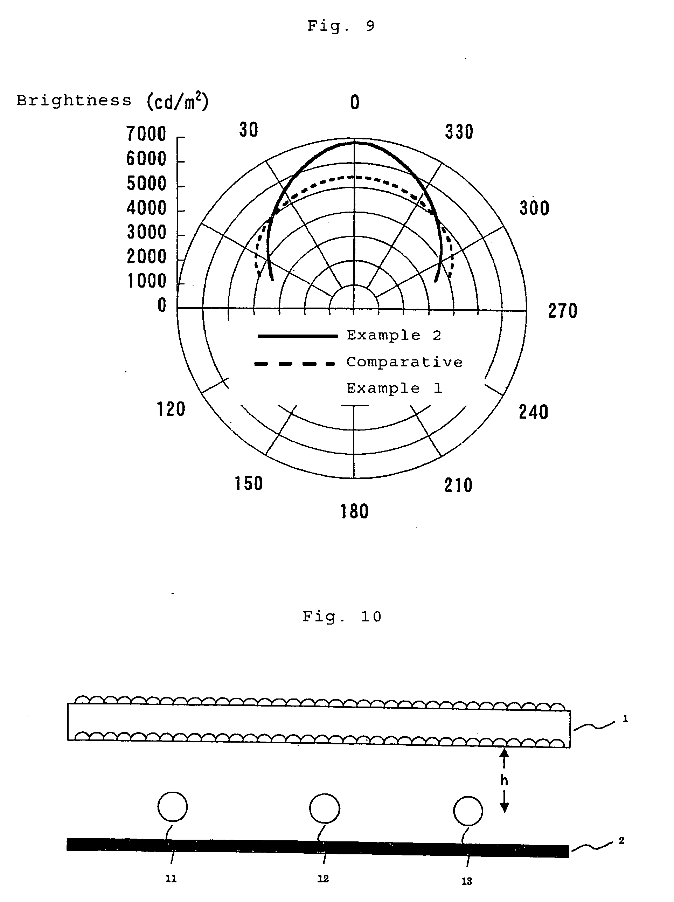

The results of evaluations of the thus obtained light diffusion plates are shown in Table 1, and the results of evaluations of brightness angular distributions measured for Example 2 and Comparative Example 1 are shown in Fig. 9.

Table 1

| | Resin Material | Recesses on Light Source Side | | | | w (mm) | L (mm) | w/L |
|---|---|---|---|---|---|---|---|---|
| | | Shape | α (°) | Depth (μm) | Distance between Centers of Gravity of Adjacent Recesses (μm) | | | |
| Ex.1 | PC | Four-Sided Pyramid | 15 | 7 | 50 | 15 | 25 | 0.60 |
| Ex.2 | PC | Four-Sided Pyramid | 30 | 15 | 50 | 14 | 25 | 0.55 |
| Ex.3 | PC | Four-Sided Pyramid | 30 | 15 | 50 | 18 | 25 | 0.72 |
| Ex.4 | PC | Four-Sided Pyramid | 30 | 15 | 50 | 22 | 25 | 0.88 |
| Ex.5 | PC | Four-Sided Pyramid | 30 | 15 | 50 | 18 | 25 | 0.72 |
| Ex.6 | PC | Four-Sided Pyramid | 60 | 43 | 50 | 15 | 25 | 0.60 |
| Ex.7 | PC | Four-Sided Pyramid | 70 | 69 | 50 | 18 | 25 | 0.72 |
| Ex.8 | PC | Three-Sided Pyramid | 15 | 4 | 29 | 15 | 25 | 0.60 |
| Ex.9 | PC | Three-Sided Pyramid | 30 | 8 | 29 | 15 | 25 | 0.60 |
| Ex.10 | PC | Hemispherical | - | 25 | 50 | 15 | 25 | 0.60 |
| Ex.11 | PMMA | Four-Sided Pyramid | 30 | 15 | 50 | 14 | 25 | 0.55 |
| Ex.12 | COP | Four-Sided Pyramid | 30 | 15 | 50 | 14 | 25 | 0.55 |
| Ex.13 | COC | Four-Sided Pyramid | 30 | 15 | 50 | 14 | 25 | 0.55 |
| C.Ex.1 | PC | - | - | - | - | | | |
| C.Ex.2 | PC | Four-Sided Pyramid | 30 | 15 | 50 | 5 | 25 | 0.20 |
| C.Ex.3 | PC | Four-Sided Pyramid | 30 | 15 | 50 | 12 | 25 | 0.48 |

Ex.: Example, C.Ex.: Comparative Example

EP 1 870 743 A1

Table 1 (continued)

| | Shape on Liquid Crystal Panel Side | | | Average Brightness (cd/m²) | Brightness Nonuniformity |
|---|---|---|---|---|---|
| | Shape | Height (μm) | Distance between Centers of Gravity of Adjacent Recesses (μm) | | |
| Ex.1 | Hemispherical | 25 | 50 | 6860 | 0.10 |
| Ex.2 | Hemispherical | 25 | 50 | 6820 | 0.09 |
| Ex.3 | Hemispherical | 25 | 50 | 6730 | 0.04 |
| Ex.4 | Hemispherical | 25 | 50 | 6500 | 0.10 |
| Ex.5 | - | - | - | 6110 | 0.10 |
| Ex.6 | Hemispherical | 25 | 50 | 6690 | 0.05 |
| Ex.7 | Hemispherical | 25 | 50 | 6750 | 0.11 |
| Ex.8 | Hemispherical | 25 | 50 | 6840 | 0.10 |
| Ex.9 | Hemispherical | 25 | 50 | 6530 | 0.05 |
| Ex.10 | Hemispherical | 25 | 50 | 6870 | 0.08 |
| Ex.11 | Hemispherical | 25 | 50 | 6880 | 0.11 |
| Ex.12 | Hemispherical | 25 | 50 | 6810 | 0.10 |
| Ex.13 | Hemispherical | 25 | 50 | 6800 | 0.10 |
| C.Ex.1 | - | - | - | 5420 | 0.16 |
| C.Ex.2 | Hemispherical | 25 | 50 | 7250 | 0.16 |
| C.Ex.3 | Hemispherical | 25 | 50 | 6920 | 0.16 |

Ex.: Example, C.Ex.: Comparative Example

Examples 14 to 26 and Comparative Examples 4 and 5

A polycarbonate (PC) resin sheet having a thickness of 2 mm was obtained in the same manner as in Example 1 and cut into a size of 150 mm in length and 300 mm in width. Further, by using a polymethyl methacrylate (PMMA) resin (ACRYPET VH of Mitsubishi Rayon Co., Ltd.), a ring-opened cycloolefin (COP) resin (ZEONOR 1060R of ZEON CORPORATION) and a copolymerized cycloolefin (COC) resin (TOPAS 6013 of Ticona), resin sheets having a length of 150 mm, a width of 300 mm and a thickness of 2 mm were obtained by injection molding.

Next, to form fine shapes on the surface on the light source side of a light diffusion plate, a 300-$\mu$m-thick nickel stamper having four-sided-pyramid-shaped, three-sided-pyramid-shaped or hemispherical projections formed over a surface thereof was prepared. The projections on each stamper are continuous at the distance between the centers of gravity shown in Table 2, and their arrangement matched the arrangement shown in any of Figs. 3 to 5 according to the shape of the projections. At the same time, to form fine shapes on the surface on the liquid crystal panel side of the light diffusion plate, a 300-$\mu$m-thick nickel stamper having hemispherical recesses each having a diameter of 50 $\mu$m formed continuously over a surface thereof at a distance between the centers of gravity of 50 $\mu$m was also prepared.

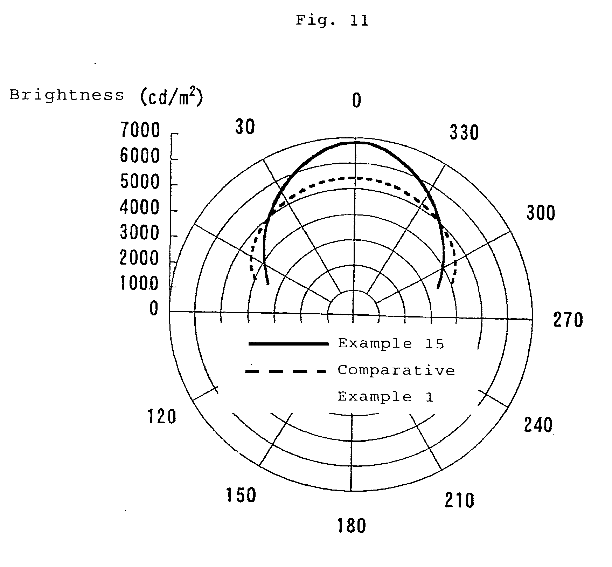

Fine shapes were formed on the resin sheet in the same manner as in Example 1 except that the above two stampers were used. The results of evaluations of the thus produced light diffusion plates are shown in Table 2, and the results of measurements of brightness angular distributions for Example 15 and Comparative Example 1 are shown in Fig. 11.

Table 2

| | Resin Material | Recesses on Light Source Side | | | |
|---|---|---|---|---|---|
| | | Shape | α (°) | Depth (µm) | Distance between Centers of Gravity of Adjacent Recesses (µm) |
| Ex.14 | PC | Four-Sided Pyramid | 15 | 7 | 50 |
| Ex.15 | PC | Four-Sided Pyramid | 30 | 15 | 50 |
| Ex.16 | PC | Four-Sided Pyramid | 30 | 15 | 50 |
| Ex.17 | PC | Four-Sided Pyramid | 40 | 21 | 50 |
| Ex.18 | PC | Four-Sided Pyramid | 50 | 30 | 50 |
| Ex.19 | PC | Four-Sided Pyramid | 60 | 43 | 50 |
| Ex.20 | PC | Four-Sided Pyramid | 70 | 69 | 50 |
| Ex.21 | PC | Three-Sided Pyramid | 15 | 4 | 29 |
| Ex.22 | PC | Three-Sided Pyramid | 30 | 8 | 29 |
| Ex.23 | PC | Hemispherical | - | 25 | 50 |
| Ex.24 | PMMA | Four-Sided Pyramid | 30 | 15 | 50 |
| Ex.25 | COP | Four-Sided Pyramid | 30 | 15 | 50 |
| Ex.26 | COC | Four-Sided Pyramid | 30 | 15 | 50 |
| C.Ex.4 | PC | Four-Sided Pyramid | 45 | 25 | 50 |
| C.Ex.5 | PC | Three-Sided Pyramid | 45 | 29 | 29 |

Ex.: Example, C.Ex.: Comparative Example

Table 2 (continued)

| | Shape on Liquid Crystal Panel Side | | | Average Brightness (cd/m$^2$) | Brightness Nonuniformity |
|---|---|---|---|---|---|
| | Shape | Height (μm) | Distance between Centers of Gravity of Adjacent Recesses (μm) | | |
| Ex.14 | Hemispherical | 25 | 50 | 6340 | 0.13 |
| Ex.15 | Hemispherical | 25 | 50 | 6000 | 0.12 |
| Ex.16 | Hemispherical | 10 | 50 | 5550 | 0.13 |
| Ex.17 | Hemispherical | 25 | 50 | 5440 | 0.13 |
| Ex.18 | Hemispherical | 25 | 50 | 5480 | 0.13 |
| Ex.19 | Hemispherical | 25 | 50 | 5940 | 0.12 |
| Ex.20 | Hemispherical | 25 | 50 | 6350 | 0.13 |
| Ex.21 | Hemispherical | 25 | 50 | 6310 | 0.13 |
| Ex.22 | Hemispherical | 25 | 50 | 6030 | 0.12 |
| Ex.23 | Hemispherical | 25 | 50 | 6370 | 0.13 |
| Ex.24 | Hemispherical | 25 | 50 | 6140 | 0.14 |
| Ex.25 | Hemispherical | 25 | 50 | 5990 | 0.12 |
| Ex.26 | Hemispherical | 25 | 50 | 6000 | 0.13 |
| C.Ex.4 | Hemispherical | 25 | 50 | 5410 | 0.24 |
| C.Ex.5 | Hemispherical | 25 | 50 | 5380 | 0.25 |

Ex.: Example, C.Ex.: Comparative Example

**Claims**

1. A resin sheet having a thickness of 1 to 5 mm, having recesses formed on one surface thereof, the recess being selected from the group consisting of a multi-sided pyramid shape, a truncated multi-sided pyramid shape, a conical shape, a truncated conical shape and a severed sphere shape, having an angle $\alpha$ which satisfies $10° \leq \alpha \leq 40°$ or $50° \leq \alpha \leq 80°$ when the angle $\alpha$ is formed by a side face of the recess having a multi-sided pyramid shape or a truncated multi-sided pyramid shape and a plane having the opening of the recess thereon or when the angle $\alpha$ is formed by the generatrix of the recess having a conical shape or a truncated conical shape and a plane having the opening of the recess thereon, and satisfying at least one of the following conditions (1) and (2).

   (1) The above recesses form a number of row groups, wherein each row group which constitue the number of row groups comprises a number of rows adjacent to each other, each row comprises the recesses arranged in a line, and each row group is adjacent to other row groups via areas free of the recesses.
   (2) Severed-sphere-shaped projections are formed on the surface opposite to the surface having the above recesses formed thereon.

2. A resin sheet having a thickness of 1 to 5 mm, having recesses formed on one surface thereof, the recess being selected from the group consisting of a multi-sided pyramid shape, a truncated multi-sided pyramid shape, a conical shape and a truncated conical shape, having an angle $\alpha$ which satisfies $40° < \alpha \leq 43°$ or $47° \leq \alpha < 50°$ when the angle $\alpha$ is formed by a side face of the recess having a multi-sided pyramid shape or a truncated multi-sided pyramid shape and a plane having the opening of the recess thereon or when the angle $\alpha$ is formed by the generatrix of the recess having a conical shape or a truncated conical shape and a plane having the opening of the recess thereon, and satisfying at least one of the following conditions (1) and (2).

   (1) The above recesses form a number of row groups, wherein each row group which constitute the number of the row groups comprises a number of rows adjacent to each other, each row comprises the recesses arranged in a line, and each row group is adjacent to other row groups via areas free of the recesses.
   (2) Severed-sphere-shaped projections are formed on the surface opposite to the surface having the above recesses formed thereon.

3. The resin sheet of claim 1, wherein the recesses formed on one surface of the resin sheet have a severed sphere shape, and the relationship between the depth d and curvature radius r of the severed-sphere-shaped recess satisfies the following expression.

$$d \geq 0.18r$$

4. The resin sheet of claim 1 or 2, wherein the resin sheet satisfies the above condition (1), and the relationship between the width w of each row group constituted by the recesses formed on one surface of the resin sheet and the distance L between the center lines of adjacent row groups satisfies the following expression.

$$0.45 \leq w/L \leq 0.9$$

5. The resin sheet of claim 1 or 2, wherein the resin sheet satisfies the above condition (2), and the projections formed on the surface opposite to the surface having the recesses formed thereon of the resin sheet each have a hemispherical shape having a diameter of 5 to 100 $\mu$m and a height of 2.5 to 50 $\mu$m.

6. The resin sheet of claim 1 or 2, wherein the resin sheet satisfies the above conditions (1) and (2).

7. Use of the resin sheet of claim 1 or 2, as a light diffusion plate for direct backlight.

8. A light diffusion plate for direct backlight which comprises the resin sheet of claim 1 or 2.

9.  A direct backlight unit having at least a plurality of linear light sources and a light diffusion plate comprising the resin sheet of claim 1 or 2.

10. The direct backlight unit of claim 9, wherein the resin sheet satisfies the above condition (1), the relationship between the width w of each row group constituted by the recesses formed on one surface of the resin sheet and the distance L between the center lines of adjacent row groups satisfies the following expression:

$$0.45 \leq w/L \leq 0.9$$

and the center line of each row group is positioned nearly directly above the central axis of each linear light source.

11. The direct backlight unit of claim 10, wherein the relationship among the width w of each row group, the distance L between the center lines of adjacent row groups and the distance h between the surface on the linear light source side of the resin sheet and the central axis of the linear light source satisfies the following expression.

$$0.05 \leq (L-w)/h \leq 1.0$$

12. A direct backlight type liquid crystal display comprising at least the direct backlight unit of claim 9, light adjusting films and a liquid crystal panel.

Fig. 1

Fig. 2

Fig. 3

50 μm    A    50 μm

B ——————————————————————— B'

A

(a)

A ————————————————— A'

(b)

B ——————————————————————— B'

(c)

Fig. 4

Fig. 5

Fig. 6

14

1

2

3  4  5  6  7  8

Fig. 7

Brightness (cd/m²)

7000
6000
5000
4000
3000
2000
1000
0

0        50       100      150

Measurement Position (mm)

Amplitude
(W)

Average
Brightness
(Ave.)

Fig. 8

1

w

L

h

2

11           12           i3

Fig. 9

Brightness (cd/m²)

Fig. 10

Fig. 11

Brightness (cd/m²)

## INTERNATIONAL SEARCH REPORT

| | International application No. |
|---|---|
| | PCT/JP2006/307692 |

A. CLASSIFICATION OF SUBJECT MATTER
*G02B5/02*(2006.01)i, *F21S2/00*(2006.01)i, *F21V3/02*(2006.01)i, *G02F1/13357*(2006.01)i, *F21Y103/00*(2006.01)n

According to International Patent Classification (IPC) or to both national classification and IPC

B. FIELDS SEARCHED

Minimum documentation searched (classification system followed by classification symbols)
G02B5/02, F21S2/00, F21V3/02, G02F1/13357, F21Y103/00

Documentation searched other than minimum documentation to the extent that such documents are included in the fields searched
Jitsuyo Shinan Koho      1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 9-96813 A  (Toshiba Lighting & Technology Corp.),<br>08 April, 1997 (08.04.97),<br>Full text; all drawings; particularly,<br>Par. Nos. [0038] to [0039]; Fig. 2<br>& JP 3447864 B2 | 1,3<br>4-12 |
| A | JP 2004-227835 A  (Konica Minolta Holdings Kabushiki Kaisha),<br>12 August, 2004 (12.08.04),<br>Full text; all drawings; particularly, Claim 1;<br>Par. Nos. [0035] to [0048]; Figs. 2 to 3<br>(Family: none) | 1,3-12 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>26 July, 2006 (26.07.06) | Date of mailing of the international search report<br>08 August, 2006 (08.08.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/307692 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 9-281475 A  (Matsushita Electric Industrial Co., Ltd.), 31 October, 1997 (31.10.97), Full text; all drawings; particularly, Claim 1; Par. Nos. [0017] to [0020]; Figs. 1 to 2 (Family: none) | 1,3-12 |
| X A | JP 7-244279 A  (Colcoat Engineering Kabushiki Kaisha), 19 September, 1995 (19.09.95), Full text; all drawings; particularly, Claims 1 to 7; Par. Nos. [0007] to [0013]; Fig. 1 (Family: none) | 1 3,5,7-9,12 |

Form PCT/ISA/210 (continuation of second sheet) (April 2005)

# EP 1 870 743 A1

<table>
<tr><td>**INTERNATIONAL SEARCH REPORT**</td><td>International application No.<br>PCT/JP2006/307692</td></tr>
</table>

**Box No. II**   **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☒ Claims Nos.:  2
because they relate to parts of the international application that do not comply with the prescribed requirements to such an extent that no meaningful international search can be carried out, specifically:
The invention in Claim 2 specifies that the angle $\alpha$ is $40° < \alpha \leq 43°$ or $47° \leq \alpha < 50°$ in the recessed parts of polygonal pyramid shape formed in one surface of the resin sheet. However, any embodiment objectively (continued to extra sheet)

3. ☐ Claims Nos.:
because they are dependent claims and are not drafted in accordance with the second and third sentences of Rule 6.4(a).

**Box No. III**   **Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

29

**EP 1 870 743 A1**

International application No.

PCT/JP2006/307692

Continuation of Box No.II-2 of continuation of first sheet(2)

supporting such an action that a high uniformity of brightness can be realized by bringing the recessed parts in the range of the angle is not present in the description. Accordingly, the invention is inadequately supported by the description.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3078701 A
- JP 5257002 A
- JP 8188709 A
- JP 9020860 A
- JP 2004163575 A
- JP 6308304 A
- JP 2004127680 A
- JP 3014882 A
- JP 3122137 A
- JP 8010596 A